# EUROPEAN PATENT APPLICATION

(11) **EP 4 009 678 A1**
(43) Date of publication of application: **08.06.2022**
(21) Application number: 21182453.7
(22) Date of filing: 29.06.2021
(51) Int. Cl.: H04W 4/90, G06Q 10/06, G06Q 50/26

(54) **DEVICE AND METHOD FOR CALCULATING A WEIGHTED RISK INDEX**

(30) Priority: 01.12.2020 IT 202000029156
(71) Applicant: Luogo Sicuro S.r.l., 84124 Salerno (SA) (IT)
(72) Inventor: TRONCONE, Lorella, 84127 SALERNO (SA) (IT); TRONCONE, Carmen, 84135 SALERNO (SA) (IT)
(74) Representative: Conversano, Gabriele

(57) **Abstract**

Electronic device comprising remote communication means, a user interface, geographical position acquisition means in which the device is arranged, characterized in that data relating to the kind, position and geographical extension of a plurality of mapped risks relating to a portion of land; data relating to the position of a plurality of safe places defined for the same portion of land; the cartography relating to the road paths usable in the same portion of land are stored on the device, in that a computer program is also loaded on said device, configured:
100) to receive from a remote server an alert message containing the indication of an adverse event in progress, and the localization and kind of such adverse event;
200) to individuate, as a function of the position of the device, and as a function of the kind, position and geographical position of all the risks mapped for a portion of land, as well as of the position of all the safe places defined for the same portion of land, the safe place to be reached with the lowest possible level of risk;
300) to send the user a message containing the indication of the need to reach a safe place, containing the indication of the safe place individuated and the instructions to reach the same,
and in that said individuation of point 200) is obtained by calculating, for each safe place in an area defined with respect to the position of the device, a weighted risk index for the path device-safe place.

## Description

The present invention relates to a method for calculating a weighted risk index associated to a path for reaching a safe place in case of natural disaster.

### Technical field

It is known the usage of maps of the Civil Protection Department Plans which are distributed to citizens for diffusion and information about cities plans of the Civil Protection Department. Such maps are commonly available in paper and contain the identification of areas, associated to one or more risk profiles, and of safe places to reach in case of natural disaster.

For example, the risks considered are of two kinds:
- risks characterized by an areal extension;
- risks characterized by a punctual localization. Flood risk, chemical industrial risk, landslide risk, fire risk, hydraulic risk, health risk, earthquake risk, the risk deriving from hydraulic danger, the risk deriving from hydrogeological danger, the risk deriving from landslide danger, the risk deriving from volcanic danger belong all to the first category (risks characterized by an areal extension).

The critical points of hydrogeological danger, of landslide risk, of flood risk, of fire risk belong all to the second category (risks characterized by punctual localization).

For "safe place" it is intended instead a waiting area which people can reach in case of natural disaster. Generally, for each safe place it is needed to guarantee the safety of the path to reach it; the shortest possible usage time in case of emergency.

### Technical problem

Even if the just described information about localization of areal risks, localization of punctual risks and localization of safe places are generally available in the plans of the Civil Protection Department, and even if such information can be digitalized and geo-referenced by using techniques known at the state of the art, the problem to decide which safe place to reach as a function of the position of the user and the natural disaster in progress, remain unsolved, although the nearest safe place is not necessarily the one which reduces risks while reaching it.

### Aim of the invention

Aim of the present invention is to provide a method for choosing the safe place to be reached in case of natural disaster as a function of the position of the user with respect to the position of the risks and safe places.

According to another aim, the present invention provides a method for calculating a weighted risk index of the path to be followed to reach a safe place.

Yet, according to another aim, the present invention relates to a device on which computer programs are loaded, configured to carry out the methods for choosing the safe place to be reached.

### Detailed description

The method for calculating a risk index to be associated to a path according to the present invention is implemented in computer programs loaded on an electronic device.

Preferably, said electronic device is a mobile device (such as a smartphone or tablet), provided with remote communication means, a suitable user interface and acquisition means of the geographical position of the position of the device.

These means are known per se and will not be described in more detail herein.
- Data relating to the kind, position and geographical extension of all the risks mapped for a portion of land;
- data relating to the position of safe places defined for the same portion of land;
- the cartography relating to the road paths usable in the same portion of land
are stored on the device.

The kinds of risks, both areal and punctual, are the just described ones.

Moreover, a computer program is loaded on the device, configured:
100) to receive from a remote server an alert message containing the indication of an adverse event in progress, and the localization and kind of such adverse event.
   As a way of example, said adverse event can be an earthquake, a landslide, a flood of a portion of land.
200) to individuate, as a function of the position of the device, and as a function of the kind, position and geographical position of all the risks mapped for a portion of land, as well as of the position of all the safe places defined for the same portion of land, the safe place to be reached with the lowest possible level of risk;
300) to send the user a message containing the indication of the need to reach a safe place, containing the indication of the safe place individuated and the instructions to reach the same.

The program is characterized in that this individuation of point 200) is obtained by calculating, for each safe place included in an area defined with respect to the position of the device, a weighted risk index for the path which leads from the position of the device to each safe place.

Said area has preferably a predefined geographical extension, for example 10 km.

Preferably, said weighted risk index for the path device-safe place is calculated not only as a function of the kind, position and geographical extension of all the risks mapped for a portion of land, as well as of the position of the safe places defined for the same portion of land, but also as a function of:
- the minimum distance between the path device-safe place and each of said risks;
- the time estimated for the user to reach said point where the path is at minimum distance from each of said risks;
- a geographical buffer around each of said risks depending on the kind of risk and kind of adverse event.

The weighted risk index calculation occurs considering possible following adverse events after the first one, which causes the need to reach a safe place.

For example, an earthquake can cause a landslide, a landslide can cause a flooding of a portion of land and so on.

Moreover, it is also logically considered a time interval between distinct and concatenated events and excluded from the calculation of the path risk index the adverse events occurring in geographical places very close to the user and which, so, would be probably yet solved when the second adverse event occurs.

To such aim the method provides:
201) to associate to each mapped risk (Ri) a classification linked to the kind thereof;
202) to associate to each kind of adverse event a coefficient of concatenation with respect to each other kind, said coefficient being structured so that the probability that an event of first kind (a) causes a following one of a different kind (b) or of the same kind is considered,
203) to calculate for the risk originating the adverse event occurred, a coefficient of cause with all the other risks (Cij), said coefficient of cause being a function of the coefficient of concatenation between the two kinds of risks considered and the geographical distance between the adverse event occurred and the area of risk assigned to each mapped risk.

At this point, once for each safe place the path leading form the current position of the device to the safe place is calculated, it is possible:
204) to assign to each area of risk another buffer, as a function of said coefficient of cause,
205) to count all the areas of risks crossed by said path,
206) to assign to each path a risk score equal to the sum of all the areas of risk crossed,
207) to identify the path with the lower risk score,
208) to individuate the shortest path among all the paths with the same risk score.

In a particular embodiment, said buffer of point 204 is calculated as a function of the coefficient of cause and arriving estimated time of the device to the point where the distance between the path leading from the current position of the device to the safe place and the area of risk is lower.

In other words - and as a way of example - if the path passes, in its closest point, at 500 m from the area of risk, the buffer of point 204 is estimated as a function of the arriving time of the user in the point of the path distant 500 m from the area of risk.

In particular, while the arriving estimated time increases, said geometrical buffer increases, so that it is considered that the second adverse event could develop its own effects on a wider area while time passes.

In another embodiment, at point 204) said buffer is subdivided in a plurality of concentric strips as a function of the distance from the area of risk, and to each one of said strips a coefficient of score between 0 and 1 is assigned, decreasing while moving away from the mapped area at risk (value 1 being assigned to the mapped area of risk), and at point 206 to each path the sum of the values of the coefficients of score crossed by the path is assigned.

## Claims

1. Electronic device comprising remote communication means, a user interface, geographical position acquisition means,
**characterized in that**
- data relating to the kind, position and geographical extension of a plurality of risks relating to a portion of land;
- data relating to the position of a plurality of safe places provided in the same portion of land;
- the cartography relating to the road paths usable in the same portion of land
are stored on the device,
**in that** a computer program is also loaded on said device, configured:
100) to receive from a remote server an alert message containing the indication of an adverse event in progress, and the localization and kind of such adverse event;
200) to individuate, as a function of the position of the device, and as a function of the kind, position and geographical position of all the risks mapped for a portion of land, as well as of the position of all the safe places defined for the same portion of land, the safe place to be reached with the lowest possible level of risk;
300) to send the user a message containing the indication of the need to reach a safe place, containing the indication of the safe place individuated and the instructions to reach the same,
and **in that** this individuation of point 200) is obtained by calculating, for each safe place in an area defined with respect to the position of the device, a weighted risk index for the path device-safe place.

2. Device according to claim 1, **characterized in that** said weighted risk index for the path device-safe place is calculated not only as a function of the kind, position and geographical extension of all the risks mapped for a portion of land, as well as of the position of the safe places defined for the same portion of land, but also as a function of:
- the minimum distance between the path device-safe place and each of said risks;
- the time estimated for the user to reach the point where the path is at minimum distance from each of said risks;
- a geographical buffer around each of said risks depending on the kind of risk and kind of adverse event.

3. Device according to claim 1 or 2, **characterized in that** said computer program is configured:
201) to associate to each mapped risk (Ri) a classification linked to the kind of adverse event associated thereto;
202) to associate to each kind of adverse event a coefficient of concatenation with respect to each other kind, said coefficient being structured so that the probability that an event of first kind (a) causes a following one of a different kind (b) or of the same kind (a) is considered,
203) to calculate for said adverse event in progress of point 100) a coefficient of cause with all the other risks (Cij), said coefficient of cause being a function of the coefficient of concatenation between the two kinds of risks considered and the geographical distance between the adverse event occurred and the area of risk assigned to each mapped risk,
it is also configured to calculate for each one of said safe places the path leading form the current position of the device to the safe place, and so:
204) to assign to each area of risk another buffer, as a function of said coefficient of cause of point 203,
205) to count all the areas of risks crossed by said path,
206) to assign to each path a risk score equal to the sum of all the areas of risk crossed,
207) to identify the path with the lower risk score,
208) to individuate the shortest path among all the paths with the same risk score.

4. Device according to claim 3, **characterized in that** said buffer of point 204 is calculated as a function of said coefficient of cause and arriving estimated time of said device to the point where the distance between said path and the area of risk is lower.

5. Device according to claim 4, **characterized in that** while the arriving estimated time increases, said buffer amplitude of point 204 increases.

6. Device according to claim 5, **characterized in that** at point 204) said buffer is subdivided in a plurality of concentric strips as a function of the distance from the area of risk, and to each one of said strips a coefficient of score between 0 and 1 is assigned, decreasing while moving away from the mapped area at risk, and **in that** at point 206 to each path the sum of the values of the coefficients of score crossed by the path is assigned.
